# EUROPÄISCHE PATENTSCHRIFT

(11) **EP 1 493 634 B1**
(45) Veröffentlichungstag und Bekanntmachung des Hinweises auf die Patenterteilung: **08.03.2006**
(21) Anmeldenummer: 04090225.6
(22) Anmeldetag: 09.06.2004
(51) Int. Cl.: B60R 21/01

(54) **Airbagmodul mit Gehäuse für die Aufnahme mindestens eines Gasgenerators und mindestens eines Gassacks**
Airbag module with housing for the reception of at least one gas generator and at least one air bag
Module de coussin gonflable avec un boîtiér recevant au moins un générateur de gaz et au moins un coussin gonflable

(30) Priorität: 30.06.2003 DE 20310345 U
(43) Veröffentlichungstag der Anmeldung: 05.01.2005
(73) Patentinhaber: Takata-Petri AG, 63743 Aschaffenburg (DE)
(72) Erfinder: Sakaguchi, Takashi, 63776 Möbris (DE)
(74) Vertreter: Baumgärtel, Gunnar

(56) Entgegenhaltungen:
- DE-A- 4 435 451
- DE-A- 19 751 991
- DE-C- 4 430 588
- ANONYMOUS: "Movable air bag module" RESEARCH DISCLOSURE, KENNETH MASON PUBLICATIONS, HAMPSHIRE, GB, Bd. 424, Nr. 64, August 1999 (1999-08), XP007124709 ISSN: 0374-4353

## Beschreibung

Die Erfindung betrifft ein Airbagmodul mit Gehäuse für die Aufnahme mindestens eines Gasgenerators und mindestens eines Gassacks nach dem Oberbegriff des Anspruchs 1.

Aus dem Patent DE 44 30 588 ist ein Gassacksystem bekannt, das mindestens zum Teil vom Fahrzeuginsassen wegbewegbar ist. Hierzu ist das Gehäuse für die Aufnahme des Gasgenerators und des Gassacks auf plastisch verformbaren oder federnden Elementen zur Energieaufnahme befestigt. Dadurch soll vermieden werden, daß ein Insasse, der im Crashfall nicht aufrecht sitzt sondern nach vorn gebeugt ist und sich mit dem Kopf innerhalb des für den aufblasbaren Gassack vorgesehenen Raumes befindet, durch diesen sowie eventuell durch Teile der Abdeckkappe des Airbagmoduls nicht verletzt wird. Weiterhin sind ebenfalls zur Energieaufnahme und zur Dämpfung der Bewegung zusätzlich Gasdruckfedern vorgesehen.

Weiterhin ist aus der Offenlegungeschrift DE 197 51 991 A1 ein Airbagmodul bekannt, bei dem das Gehäuse für die Aufnahme des Gasgenerators und des Gassacks einerseits mittels verformbarer Flansche an der Armaturentafel und andererseits mittels verformbarer Elemente an der Unterkonstruktion der Armaturentafel befestigt ist. Durch diese verformbaren Flansche und verformbaren Elemente soll durch eine gedämpfte Bewegung des Gehäuses vom Fahrzeuginsassen weg ebenfalls Energie beim Kopfaufschlag des Fahrzeuginsassen aufgenommen werden.

Es ist somit bekannt, für die Energieaufnahme bzw. für die Dämpfung der Bewegung des Gehäuses zwei unterschiedliche Elemente vorzusehen. Der Nachteil dieser beschriebenen Anordnungen besteht darin, daß der Aufbau des Airbagmoduls zu kompliziert ist, so daß der Fertigungsaufwand insbesondere für die jeweils zwei Verformungs- bzw Dämpfungselemente sowie auch deren Montagekosten zu hoch sind.

Der Erfindung liegt deshalb die Aufgabe zugrunde, den Aufbau eines Airbagmoduls mit vom Insassen wegbewegbarem Gehäuse zu vereinfachen, um Fertigungs- und Montagekosten zu senken.

Erfindungsgemäß wird das gemäß den Merkmalen des Anspruchs 1 erreicht.

Bei einem Airbagmodul mit Gehäuse für die Aufnahme mindestens eines Gasgenerators und mindestens eines Gassacks, wobei zwischen dem Gehäuse und der Armaturentafel keine Verbindung besteht und wobei das Gehäuse vom Insassen wegbewegbar ist, weist das Gehäuse erfindungsgemäß mindestens ein Laschenpaar auf, das eine erste verformbare Lasche für die Befestigung des Gehäuses auf einem Fahrzeugquerträger und eine zweite mit einem sich im wesentlichen in Bewegungsrichtung des Gehäuses erstreckenden Langloch versehene Lasche für die Führung mindestens eines Verbindungselementes während der Bewegung des Gehäuses und Dämpfung dieser Bewegung aufweist, wobei das Verbindungselement die erste Lasche mit dem Fahrzeugquerträger verbindet.

Bei diesem Airbagmodul sind also lediglich zwei mit dem Gehäuse verbundene Laschen und ein Verbindungselement als unterschiedliche Elemente für die Energieaufnahme und Dämpfung der Bewegung des Gehäuses bei Aufschlagen des Kopfes auf das Airbagmodul vorgesehen, wobei hauptsächlich durch das Zusammenwirken des Langloches mit dem Verbindungselement Energie aufgenommen wird. Wegen der wenigen Bauteile wird sowohl der Fertigungs- als auch der Montageaufwand verringert.

In einer Ausführung ist mindestens eine Kante des Langlochs durch das Verbindungselement bei der Bewegung des Langlochs gegenüber dem Verbindungselement deformierbar, wodurch ein Dämpfungseffekt bei der Verschiebung des Gehäuses vom Insassen weg erzielt wird. Eine weitere Möglichkeit zur Erzielung einer Dämpfung besteht darin, daß das Verbindungselement bei der Bewegung des Langlochs gegenüber dem Verbindungselement verformbar ist bzw. indem die Verformung beider Elemente ausgenutzt wird.

Die Dämpfung kann dadurch erzielt werden, daß sich das Langloch in der zweiten Lasche in Richtung des Bodens des Gehäuses auf eine Breite verringert, die kleiner ist als die Breite bzw. der Durchmesser des Verbindungselementes. Dadurch muß bei der Verschiebung des Gehäuses vom Insassen weg zunehmend mehr Kraft für die Verformung der Langlochwandung bzw. des verbindungselementes aufgebracht werden, wodurch die Dämpfung mit fortschreibender Verschiebung des Gehäuses vom Insassen weg zunimmt.

Vorzugsweise verringert sich die Breite des Langlochs kontinuierlich.

In einer ersten Ausführungsform ist vorgesehen, daß beide Kanten des Langlochs schräg bezüglich der Bewegungsrichtung des Gehäuses aufeinander zulaufen.

In einer zweiten Ausführungsform verläuft eine erste Kante des Langlochs parallel zur Bewegungsrichtung des Gehäuses, während die andere Kante schräg auf diese erste Kante zuläuft.

In einer dritten Ausführungsform verlaufen die Kanten des Langlochs parallel zueinander und schräg zur Bewegungsrichtung des Gehäuses.

Weiterhin ist es möglich, daß sich das Langloch in Richtung des Gehäusebodens zunächst auf eine Breite verringert, die kleiner ist als die Breite bzw. der Durchmesser des Verbindungselementes ist, und daß die Kanten anschließend parallel verlaufen.

Zusätzlich kann sich das Langloch an seinem dem Gehäuseboden zugekehrten Ende auf eine Breite erweitern, die der Breite bzw. dem Durchmesser des Verbindungselementes entspricht. In diesem Fall wird also in der Endphase der Verschiebung des Gehäuses das Langloch nicht mehr verformt, d.h., die Wandungen des Langlochs nehmen auch keine Energie mehr auf. Diese Erweiterung der Langlochbreite dient der vorbestimmten Erreichung der Endposition unter Berücksichtigung der Fertigungstoleranzen der Passung zwischen dem Langloch und dem Verbindungselement.

In einer Ausführungsform erweitert sich das Langloch kontinuierlich auf die Breite, die der Breite bzw. dem Durchmesser des Verbindungselementes entspricht. Weiterhin ist es auch möglich, daß sich die Breite des Langlochs von dieser Breite zu seinem dem Gehäuseboden zugekehrten Ende hin wieder kontinuierlich verringert. Dadurch wird erreicht, daß nach einer Verringerung der Energieaufnahme nochmals eine Zunahme der Energieaufnahme erzielt wird.

Als Verbindungselement ist vorzugsweise eine Schraube vorgesehen, deren Schaft sich durch das Langloch hindurch erstreckt. Mit diesem einfachen Verbindungselement wird neben der Halterung des Gehäuses die zusätzliche Dämpfung in Verbindung mit dem Langloch der zweiten Lasche erzielt.

Die Laschen sind in solchem Abstand zueinander angeordnet, daß Raum für eine Mutter für eine Schraubverbindung zwischen der ersten Lasche und dem Fahrzeugquerträger vorhanden ist.

Die erste Lasche ist vorzugsweise über eine am Fahrzeugquerträger befestigte Halterung mit diesem verbunden.

Die Laschen sind vorzugsweise am Boden des Gehäuse mit diesem verbunden.

Die erste verformbare Lasche kann sowohl insgesamt verformbar sein als auch eine deformierbare Schwachstelle aufweisen, als auch beides aufweisen, wobei im letztgenannten Fall die Schwachstelle so ausgebildet ist, daß sie sich zweckmäßiger Weise zuerst verformt.

Als deformierbare Schwachstelle kann z. B. eine Knickstelle vorgesehen sein.

Die Erfindung soll in Ausführungsbeispielen anhand von Zeichnungen erläutert werden. Es zeigen:
- Fig. 1: die Seitenansicht eines Gehäuses für die Aufnahme eines Gasgenerators und Gassacks mit einer ersten Ausführungsform einer Befestigung des Gehäuses und eines Langlochs in einer Führungslasche vor dem Aufschlag eines Insassenkopfes;
- Fig. 2: die Ausführungsform der Fig. 1 vor dem Aufschlag eines Insassenkopfes in einer Ansicht von vorn;
- Fig. 3: die Seitenansicht eines Gehäuses für die Aufnahme eines Gasgenerators und Gassacks mit einer zweiten Ausführungsform einer Befestigung des Gehäuses vor dem Aufschlag eines Insassenkopfes;
- Fig. 4: die Seitenansicht der Ausführungsform nach Fig. 1 nach dem Aufschlag eines Insassenkopfes;
- Fig. 5: die Ansicht von vorn der Ausführungsform nach Fig. 1 nach dem Aufschlag eines Insassenkopfes;
- Fig. 6: die Seitenansicht eines Gehäuses mit einer zweiten Ausführungsform eines Langlochs in einer Führungslasche;
- Fig. 7: die Seitenansicht eines Gehäuses mit einer dritten Ausführungsform eines Langlochs in einer Führungslasche.
- Fig. 8-11: Kraft-Weg-Diagramme für verschiedene Ausführungsformen des Langloches.

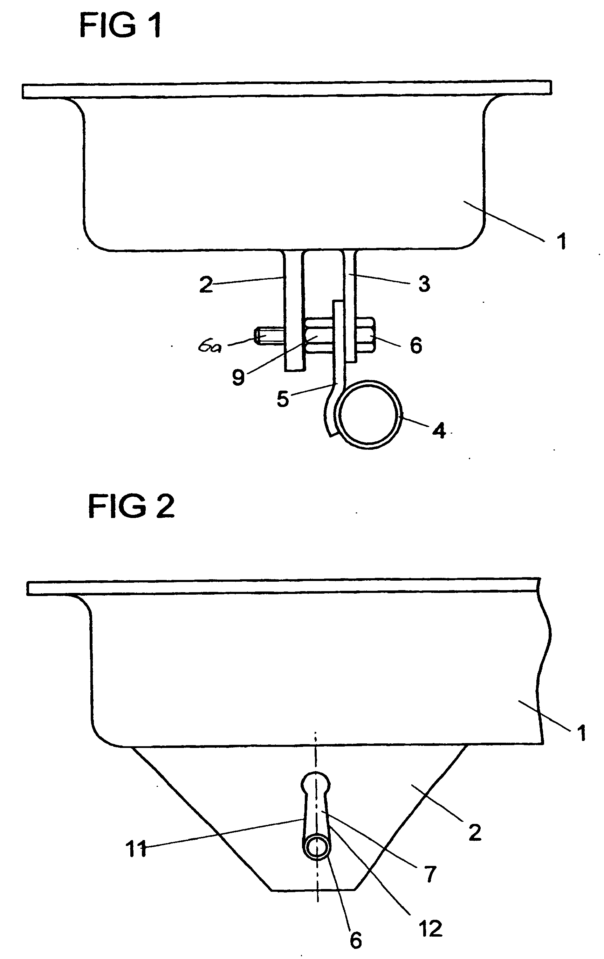

In der Fig. 1 ist ein Gehäuse 1 für die Aufnahme eines nicht dargestellten Gasgenerators und eines ebenfalls nicht dargestellten Gassacks schematisch dargestellt. Das Gehäuse ist vorzugsweise ein Gußgehäuse aus Magnesiumdruckguß oder ein Kunststoffgehäuse, das einteilig gespritzt worden ist. Am Boden des Gehäuses 1 ist eine erste Lasche. 3 und eine zweite Lasche 2 als Führungslasche befestigt. Die erste Lasche 3 dient der Befestigung des Gehäuses 1 mit einem Fahrzeugquerträger 4 mittels einer an diesem befestigten Halterung 5 und einer Schraube 6 als Verbindungselement. Die Laschen 2, 3 liegen parallel zueinander und weisen einen solchen Abstand zueinander auf, daß eine Mutter 9 zwischen ihnen bewegbar ist. Der Schaft 6a der Schraube 6 durchdringt ein Langloch 7 (Fig. 2) in der zweiten Lasche 2 an dessen unterem Ende 7a, an dem die Breite des Langlochs etwa dem Durchmesser des Schaftes 6a entspricht. Das Langloch verringert sich bei dieser ersten Ausführungsform kontinuierlich in Richtung des Gehäusebodens auf eine Breite, die geringer ist als der Durchmesser des Schaftes 6a der Schraube 6, d.h. die Kanten 11, 12 laufen aufeinander zu. Am oberen Ende 7b erweitert sich das Langloch wieder auf eine Breite, die etwa dem Durchmesser des Schaftes 6a der Schraube 6 entspricht.

Diese beschriebene Halterungsanordnung kann mehrfach, vorzugsweise zweifach, vorgesehen sein, um eine sichere Halterung des Gehäuses 1 zu erreichen.

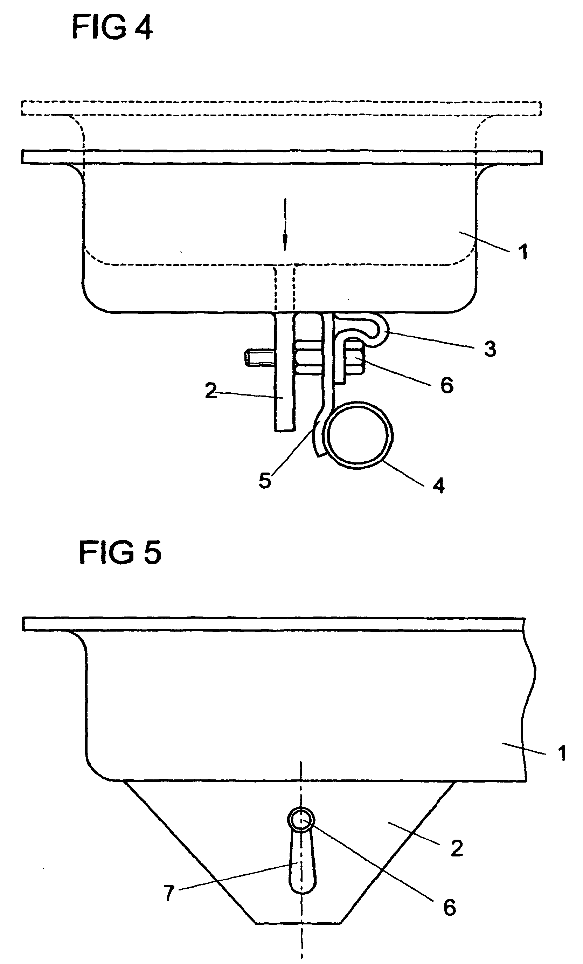

In der in der Fig. 1 dargestellten Ruhelage liegt der Schaft der Schraube 6 am unteren Ende des Langloches 7 an. Wird nun das Gehäuse 1 durch einen Kopfaufschlag vom Insassen weg verschoben, wie es in Fig. 4 dargestellt ist, wobei die Bewegungsrichtung durch den Pfeil dargestellt worden ist, verformt sich die erste Lasche 3 und nimmt dabei Energie auf. Gleichzeitig wird mit der Lasche 2 das Langloch 7 verschoben. Dabei gelangt der Schaft der Schraube 6 zunehmend in Bereiche des Langlochs, die schmaler sind als sein Durchmesser. Infolge der dadurch auftretenden Verformung der Kanten 11, 12, d.h. der Aufweitung des Langlochs 7 und/oder des Schaftes wird zunehmend mehr Energie aufgenommen, d.h., die Bewegung des Gehäuses 1 vom Insassen weg wird gedämpft. Durch dieses Zusammenwirken des Langlochs 7 mit dem Schaft 6a wird der größte Teil der beim Kopfaufschlag erzeugten Energie aufgenommen, während der Anteil der Energieaufnahme durch die Lasche 3 dagegen gering ist. Am Ende der Bewegung liegt der Schaft der Schraube 6 am oberen Ende des Langloches 7 an, wie es in Fig. 5 dargestellt ist.

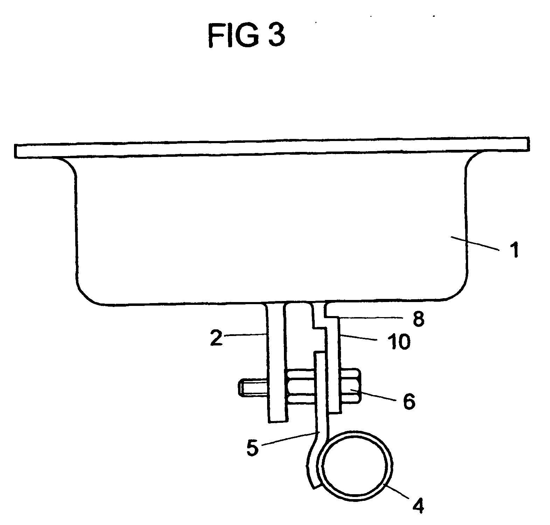

Bei der Ausführungsform der Fig. 3 weist die erste Lasche 10 eine Knickstelle 8 als deformierbare Schwachstelle auf. Bei einem Kopfaufschlag knickt bei dieser Ausführungsform die erste Lasche 10 zunächst an dieser Stelle ein. Zusätzlich kann bei einer weiteren Belastung des Gehäuses 1 auch der übrige Bereich der ersten Lasche 10 verformt werden.

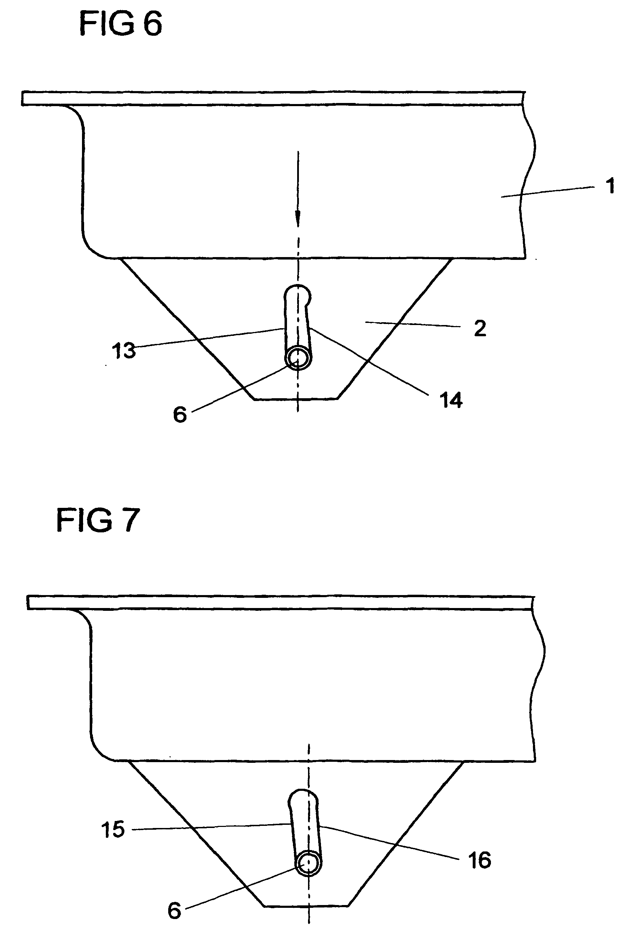

In der Fig. 6 ist eine zweite Ausführungsform des Langloches in der zweiten Lasche 2 dargestellt. Dort verläuft eine Kante 13 des Langloches parallel zur Bewegungsrichtung des Gehäuses 1, während die zweite Kante 14 schräg auf die erste Kante 13 zuläuft. Auch bei dieser Ausführungsform verringert sich die Breite des Langloches in Richtung des Bodens des Gehäuses 1.

Bei der Ausführungsform der Fig. 6 verlaufen die Kanten 15, 16 des Langloches parallel zueinander aber schräg bezüglich der Bewegungsrichtung des Gehäuses. Bei dieser Ausführungsform ist die Breite des Langlochs konstant. Eine Dämpfung der Bewegung des Gehäuses wird bei dieser Ausführungsform vor allem durch die Verformung der Kante 16 erreicht, aber auch durch die Verformung des Schaftes der Schraube 6.

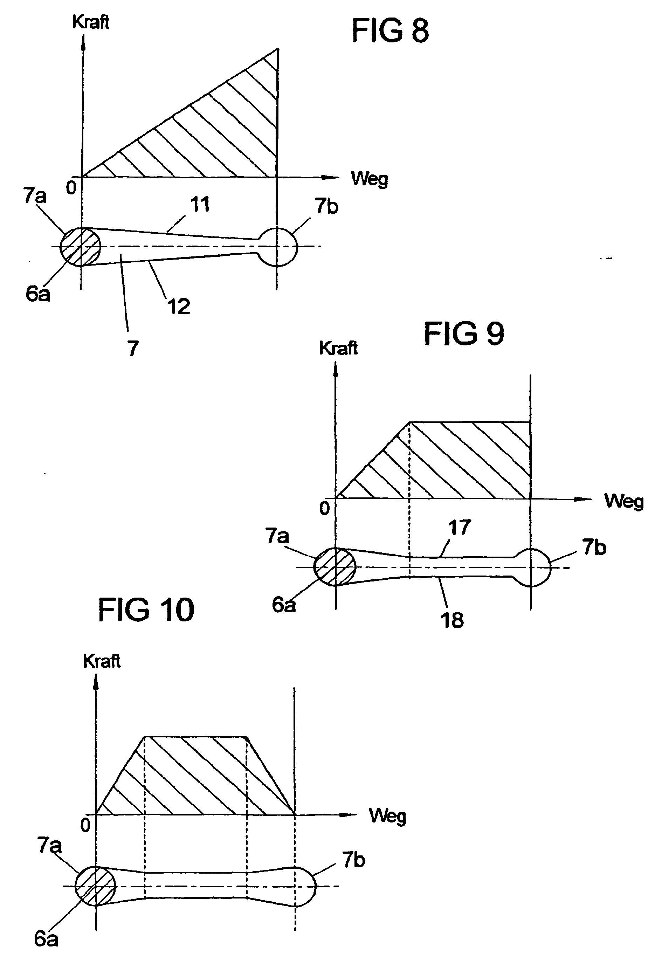

Bei den in den Figuren 8 bis 11 dargestellten Kraft-Weg-Diagrammen sind die Langlöcher gegenüber den bisherigen Darstellungen um 90 Grad gedreht dargestellt, wobei das linke Ende des Langlochs dessen unteres Ende und das rechte Ende das dem Gehäuseboden zugekehrte zugekehrte Ende des Langlochs ist. Der Schaft 6a liegt in allen Figuren in seiner Ausgangslage am unteren Ende des Langlochs, d.h., in der Darstellung der Figuren 8 bis 11 am linken Ende.

In der Fig. 8 ist ein Kraft-Weg-Diagramm für ein Langloch 7 dargestellt, bei dem sich dessen Breite, ausgehend vom unteren Ende 7a, kontinuierlich verringert. Diese Ausführungsform entspricht der in den Figuren 1, 2 und 5 dargestellten Ausführungsform. Wegen der kontinuierlichen Abnahme der Langlochbreite nimmt die Energieaufnahme durch die Wandungen des Langloches bei dessen Verschiebung gegenüber dem Schaft 6a linear zu, bis sie am anderen Ende 7b des Langloches wegen der dort vorhandenen Erweiterung auf den Durchmesser des Schaftes 6a schlagartig beendet wird.

Bei der Ausführungsform der Fig. 9 nimmt die Breite des Langloches 7 zunächst kontinuierlich ab. Anschließend bleibt die Breite bis zur Erweiterung am anderen Ende 7b des Langlochs konstant, d. h. die Kanten 17, 18 verlaufen parallel. Dadurch nimmt die Energieaufnahme durch die Wandungen des Langlochs bei dessen Verschiebung gegenüber dem Schaft 6a zunächst linear zu, bleibt dann im Bereich der konstanten Breite des Langlochs konstant und wird am anderen Ende 7b, wie bei der Ausführungsform der Fig. 8 schlagartig beendet.

Beim Langloch in der Ausführungsform der Fig. 10 nimmt die Breite zunächst kontinuierlich ab, bleibt anschließend über eine vorbestimmte Länge konstant und erweitert sich dann wieder kontinuierlich bis zur Erweiterung auf den Durchmesser des Schaftes 6a am anderen Ende 7b des Langlochs. Dadurch nimmt die Energieaufnahme durch die Wandungen des Langlochs bei dessen Verschiebung gegenüber dem Schaft 6a zunächst linear zu, bleibt dann im Bereich der konstanten Breite des Langlochs konstant und nimmt dann im Bereich der kontinuierlichen Erweiterung wieder linear ab.

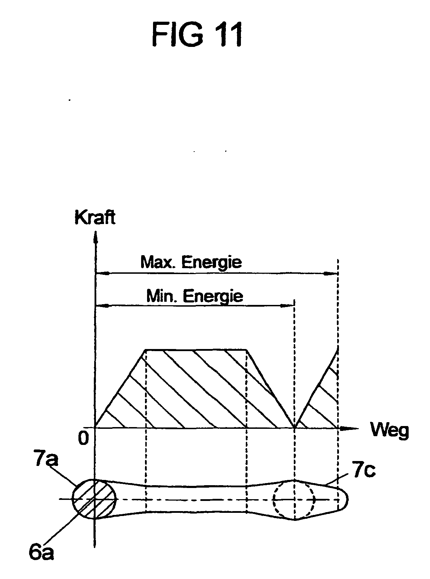

Die Ausführungsform der Fig. 11 entspricht im wesentlichen der Ausführungsform der Fig. 10. Auch hier erweitert sich das Langloch am Ende 7c zunächst wieder auf den Durchmesser des Schaftes 6a. Anschließend verringert sich die Breite des Langlochs 7 aber wieder kontinuierlich. Im Unterschied zum Kraft-Weg-Diagramm der Fig. 10 nehmen die Wandungen des Langlochs bei dessen Verschiebung gegenüber dem Schaft 6a nach Abfall der Energieaufnahme erneut Energie auf, wie aus dem rechten Abschnitt des Kraft-Weg-Diagrammes der Fig. 11 erkennbar ist.

Diese dargestellten Ausführungsformen lassen erkennen, daß durch die unterschiedliche Gestaltung des Langlochs auf einfache Weise die Energieaufnahme beim Kopfaufprall beeinflußt werden kann.

## Patentansprüche

1. Airbagmodul mit Gehäuse für die Aufnahme mindestens eines Gasgenerators und mindestens eines Gassacks, wobei zwischen dem Gehäuse und der Armaturentafel keine Verbindung besteht und wobei das Gehäuse vom Insassen wegbewegbar ist,
**dadurch gekennzeichnet,**
**daß** das Gehäuse (1) mindestens ein Laschenpaar aufweist, das eine erste verformbare Lasche (3, 10) für die Befestigung des Gehäuses (1) auf einem Fahrzeugquerträger (4) und eine zweite mit einem sich im wesentlichen in Bewegungsrichtung des Gehäuses (1) erstreckenden Langloch (7) versehene Lasche (2) für die Führung mindestens eines Verbindungselementes (6) während der Bewegung des Gehäuses (1) und Dämpfung dieser Bewegung aufweist, wobei das Verbindungselement (6) die erste Lasche (3, 10) mit dem Fahrzeugquerträger (4) verbindet.

2. Airbagmodul nach Anspruch 1, **dadurch gekennzeichnet, daß** mindestens eine Kante des Langlochs (7) durch das Verbindungselement (6) bei der Bewegung des Langlochs (7) gegenüber dem Verbindungselement zur Erzielung der Dämpfung deformierbar ist.

3. Airbagmodul nach Anspruch 1 oder 2, **dadurch gekennzeichnet, daß** das Verbindungselement (6) bei der Bewegung des Langlochs (7) gegenüber dem Verbindungselement zur Erzielung der Dämpfung verformbar ist.

4. Airbagmodul nach mindestens einem der vorhergehenden Ansprüche, **dadurch gekennzeichnet, daß** sich das Langloch (7) in der zweiten Lasche (2) in Richtung des Bodens des Gehäuses (1) auf eine Breite verringert, die kleiner ist als die Breite bzw. der Durchmesser des Verbindungselementes (6).

5. Airbagmodul nach mindestens einem der vorhergehenden Ansprüche, **dadurch gekennzeichnet, daß** sich die Breite des Langlochs (7) in Richtung des Bodens des Gehäuses (1) kontinuierlich verringert.

6. Airbagmodul nach mindestens einem der vorhergehenden Ansprüche, **dadurch gekennzeichnet, daß** beide Kanten (11, 12) des Langlochs (7) schräg bezüglich der Bewegungsrichtung des Gehäuses (1) aufeinander zulaufen.

7. Airbagmodul nach mindestens einem der vorhergehenden Ansprüche, **dadurch gekennzeichnet, daß** eine erste Kante (13) des Langlochs (7) parallel zur Bewegungsrichtung des Gehäuses (1) verläuft, während die andere Kante (14) schräg auf diese erste Kante (13) zuläuft.

8. Airbagmodul nach mindestens einem der Ansprüche 1 bis 9, **dadurch gekennzeichnet, daß** die Kanten (15, 16) des Langlochs (7) parallel zueinander und schräg zur Bewegungsrichtung des Gehäuses (1) verlaufen.

9. Airbagmodul nach mindestens einem der Ansprüche 1 bis 4, **dadurch gekennzeichnet, daß** sich das Langloch (7) in Richtung des Gehäusebodens zunächst auf eine Breite verringert, die kleiner als die Breite bzw. der Durchmesser des Verbindungselementes (6) ist, und daß die Kanten (17,18) anschließend parallel verlaufen.

10. Airbagmodul nach mindestens einem der vorhergehenden Ansprüche, **dadurch gekennzeichnet, daß** sich das Langloch (7) an seinem dem Gehäuseboden zugekehrten Ende (7b) auf eine Breite erweitert, die der Breite bzw. dem Durchmesser des Verbindungselementes (6) entspricht.

11. Airbagmodul nach Anspruch 10, **dadurch gekennzeichnet, daß** die Erweiterung kontinuierlich erfolgt.

12. Airbagmodul nach Anspruch 11, **dadurch gekennzeichnet, daß** sich die Breite des Langlochs an seinem dem Boden des Gehäuses (1) zugekehrten Ende (7c) von der Breite, die dem Durchmesser des Verbindungselementes (6) entspricht, kontinuierlich verringert.

13. Airbagmodul nach mindestens einem der vorhergehenden Ansprüche, **dadurch gekennzeichnet, daß** als Verbindungselement eine Schraube (6) vorgesehen ist, deren Schaft (6a) sich durch das Langloch (7) hindurch erstreckt.

14. Airbagmodul nach mindestens einem der vorhergehenden Ansprüche, **dadurch gekennzeichnet, daß** die Laschen (2, 3, 10) in solchem Abstand zueinander angeordnet sind, daß Raum für eine Mutter (9) für eine Schraubverbindung zwischen der ersten Lasche (3, 10) und dem Fahrzeugquerträger (4) vorhanden ist.

15. Airbagmodul nach mindestens einem der vorhergehenden Ansprüche, **dadurch gekennzeichnet, daß** die erste Lasche (3, 10) über eine am Fahrzeugquerträger (4) befestigte Halterung (5) mit diesem verbunden ist.

16. Airbagmodul nach mindestens einem der vorhergehenden Ansprüche, **dadurch gekennzeichnet, daß** die Laschen (2, 3, 10) am Boden des Gehäuses (1) mit diesem verbunden sind.

17. Airbagmodul nach mindestens einem der vorhergehenden Ansprüche, **dadurch gekennzeichnet, daß** die erste verformbare Lasche (3, 10) insgesamt verformbar ist.

18. Airbagmodul nach mindestens einem der vorhergehenden Ansprüche, **dadurch gekennzeichnet, daß** die erste verformbare Lasche (10) eine deformierbare Schwachstelle (8) aufweist.

19. Airbagmodul nach Anspruch 18, **dadurch gekennzeichnet, daß** als deformierbare Schwachstelle eine Knickstelle (8) vorgesehen ist.

## Claims

1. Airbag module having a housing for accommodating at least one gas generator and at least one airbag, there being no connection between the housing and the dashboard and it being possible for the housing to move away from the occupant, **characterized in that** the housing (1) has at least one pair of brackets comprising a first deformable bracket (3, 10) for fastening the housing (1) on a vehicle cross member (4) and a second bracket (2), which is provided with a slot (7) extending essentially in the direction of movement of the housing (1), for guiding at least one connecting element (6) during the movement of the housing (1) and for damping this movement, the connecting element (6) connecting the first bracket (3, 10) to the vehicle cross member (4).

2. Airbag module according to Claim 1, **characterized in that** at least one edge of the slot (7) can be deformed by the connecting element (6) during the movement of the slot (7) relative to the connecting element, in order to obtain the damping.

3. Airbag module according to Claim 1 or 2, **characterized in that** the connecting element (6) can be deformed during the movement of the slot (7) relative to the connecting element, in order to obtain the damping.

4. Airbag module according to at least one of the preceding claims, **characterized in that** the slot (7) is reduced in the second bracket (2), in the direction of the bottom of the housing (1), to a width which is smaller than the width or the diameter of the connecting element (6).

5. Airbag module according to at least one of the preceding claims, **characterized in that** the width of the slot (7) is continuously reduced in the direction of the bottom of the housing (1).

6. Airbag module according to at least one of the preceding claims, **characterized in that** both edges (11, 12) of the slot (7) taper towards each other obliquely with respect to the direction of movement of the housing (1).

7. Airbag module according to at least one of the preceding claims, **characterized in that** a first edge (13) of the slot (7) runs parallel to the direction of movement of the housing (1) while the other edge (14) tapers obliquely towards this first edge (13).

8. Airbag module according to at least one of Claims 1 to 7, **characterized in that** the edges (15, 16) of the slot (7) run parallel to each other and obliquely with respect to the direction of movement of the housing (1).

9. Airbag module according to at least one of Claims 1 to 4, **characterized in that** the slot (7) is reduced in the direction of the housing bottom initially to a width which is smaller than the width or the diameter of the connecting element (6), and **in that** the edges (17, 18) then run parallel.

10. Airbag module according to at least one of the preceding claims, **characterized in that** the slot (7) is widened at its end (7b) facing the housing bottom to a width which corresponds to the width or the diameter of the connecting element (6).

11. Airbag module according to Claim 10, **characterized in that** the widening takes place continuously.

12. Airbag module according to Claim 11, **characterized in that** the width of the slot is continuously reduced at its end (7c) facing the bottom of the housing (1) from the width which corresponds to the diameter of the connecting element (6).

13. Airbag module according to at least one of the preceding claims, **characterized in that** a screw (6) whose shank (6a) extends through the slot (7) is provided as the connecting element.

14. Airbag module according to at least one of the preceding claims, **characterized in that** the brackets (2, 3, 10) are arranged at such a distance from one another that there is space for a nut (9) for a screw connection between the first bracket (3, 10) and the vehicle cross member (4).

15. Airbag module according to at least one of the preceding claims, **characterized in that** the first bracket (3, 10) is connected to the vehicle cross member via a mount (5) fastened to the said vehicle cross member (4).

16. Airbag module according to at least one of the preceding claims, **characterized in that** the brackets (2, 3, 10) are connected to the housing (1) at the bottom thereof.

17. Airbag module according to at least one of the preceding claims, **characterized in that** the first deformable bracket (3, 10) can be deformed in its entirety.

18. Airbag module according to at least one of the preceding claims, **characterized in that** the first deformable bracket (10) has a deformable weak point (8) .

19. Airbag module according to Claim 18, **characterized in that** a kink (8) is provided as the deformable weak point.

## Revendications

1. Module de coussin gonflable avec boîtier pour la réception d'au moins un générateur de gaz et d'au moins un sac à gaz, aucune liaison n'existant entre le boîtier et le tableau de bord et le boîtier pouvant être déplacé en éloignement de l'occupant,
**caractérisé en ce que**
le boîtier (1) présente au moins une paire d'attaches qui présentent une première attache (3, 10) déformable pour la fixation du boîtier (1) sur une traverse de véhicule (4) et une deuxième attache (2) pourvue d'un trou oblong (7) s'étendant sensiblement en direction de déplacement du boîtier (1) pour le guidage d'au moins un élément de liaison (6) pendant le déplacement du boîtier (1) et l'amortissement de ce déplacement, l'élément de liaison (6) reliant la première attache (3, 10) à la traverse de véhicule (4).

2. Module de coussin gonflable selon la revendication 1, **caractérisé en ce que** pour obtenir l'amortissement, au moins une arête du trou oblong (7) est déformable par l'élément de liaison (6) lors du déplacement du trou oblong (7) par rapport à l'élément de liaison.

3. Module de coussin gonflable selon la revendication 1 ou 2, **caractérisé en ce que** pour obtenir l'amortissement, l'élément de liaison (6) est déformable lors du déplacement du trou oblong (7) par rapport à l'élément de liaison.

4. Module de coussin gonflable selon au moins l'une des revendications précédentes, **caractérisé en ce que** le trou oblong (7) se réduit dans la deuxième attache (2) en direction du fond du boîtier (1) à une largeur qui est inférieure à la largeur ou au diamètre de l'élément de liaison (6).

5. Module de coussin gonflable selon au moins l'une des revendications précédentes, **caractérisé en ce que** la largeur du trou oblong (7) se réduit de manière continue en direction du fond du boîtier (1).

6. Module de coussin gonflable selon au moins l'une des revendications précédentes, **caractérisé en ce que** les deux arêtes (11, 12) du trou oblong (7) convergent l'une vers l'autre en oblique par rapport à la direction de déplacement du boîtier (1).

7. Module de coussin gonflable selon au moins l'une des revendications précédentes, **caractérisé en ce qu'**une première arête (13) du trou oblong (7) s'étend parallèlement à la direction de déplacement du boîtier (1), tandis que l'autre arête (14) se dirige en oblique vers cette première arête (13).

8. Module de coussin gonflable selon au moins l'une des revendications 1 à 7, **caractérisé en ce que** les arêtes (15, 16) du trou oblong (7) s'étendent parallèlement l'une à l'autre et en oblique par rapport à la direction de déplacement du boîtier (1).

9. Module de coussin gonflable selon au moins l'une des revendications 1 à 4, **caractérisé en ce que** le trou oblong (7) se réduit en direction du fond du boîtier tout d'abord à une largeur qui est inférieure à la largeur ou au diamètre de l'élément de liaison (6), et **en ce que** les arêtes (17, 18) s'étendent ensuite en parallèle.

10. Module de coussin gonflable selon au moins l'une des revendications précédentes, **caractérisé en ce que** le trou oblong (7) s'élargit à son extrémité (7b) tournée vers le fond de boîtier à une largeur qui correspond à la largeur ou au diamètre de l'élément de liaison (6).

11. Module de coussin gonflable selon la revendication 10, **caractérisé en ce que** l'élargissement a lieu de manière continue.

12. Module de coussin gonflable selon la revendication 11, **caractérisé en ce que** la largeur du trou oblong à son extrémité (5c) tournée vers le fond du boîtier (1) se réduit de manière continue depuis la largeur qui correspond au diamètre de l'élément de liaison (6).

13. Module de coussin gonflable selon au moins l'une des revendications précédentes, **caractérisé en ce qu'**il est prévu en tant qu'élément de liaison une vis (6) dont la tige (6a) s'étend à travers le trou oblong (7).

14. Module de coussin gonflable selon au moins l'une des revendications précédentes, **caractérisé en ce que** les attaches (2, 3, 10) sont agencées les unes par rapport aux autres à une distance telle qu'il y a de la place pour un écrou (9) pour une liaison par vissage entre la première attache (3, 10) et la traverse de véhicule (4).

15. Module de coussin gonflable selon au moins l'une des revendications précédentes, **caractérisé en ce que** la première attache (3, 10) est reliée à la traverse de véhicule (4) par une monture (5) fixée sur celle-ci.

16. Module de coussin gonflable selon au moins l'une des revendications précédentes, **caractérisé en ce que** les attaches (2, 3, 10) sont reliées au boîtier (1) sur le fond de celui-ci.

17. Module de coussin gonflable selon au moins l'une des revendications précédentes, **caractérisé en ce que** la première attache 3, 10) déformable est déformable dans son ensemble.

18. Module de coussin gonflable selon au moins l'une des revendications précédentes, **caractérisé en ce que** la première attache (10) déformable présente un point faible déformable.

19. Module de coussin gonflable selon la revendication 18, **caractérisé en ce qu'**il est prévu un point d'inflexion à titre de point faible déformable.
